# EUROPEAN PATENT SPECIFICATION

(11) **EP 0 270 910 B1**
(45) Date of publication and mention of the grant of the patent: **14.02.1996**
(21) Application number: 87117312.6
(22) Date of filing: 24.11.1987
(51) Int. Cl.: F24J 2/04

(54) **Substitute solar roof for replacing building roofs**
Ersatzsolardach zum Ersetzen von Gebäudedächern
Toit solaire de substitution pour remplacer des toits de bâtiments

(30) Priority: 24.11.1986 ES 8603160
(43) Date of publication of application: 15.06.1988
(73) Proprietor: Martinez Galán, José, E-28034 Madrid (ES)
(72) Inventor: Martinez Galán, José, E-28034 Madrid (ES)
(74) Representative: Flaccus, Rolf-Dieter, Dr.

(56) References cited:
- EP-A- 0 025 212
- CH-A- 606 690
- DE-A- 2 833 328
- DE-A- 2 912 206
- FR-A- 2 303 251
- US-A- 3 001 331
- US-A- 4 235 679
- US-A- 4 263 894
- US-A- 4 265 219
- US-A- 4 408 596
- US-A- 4 452 230

## Description

The object of this application for an Invention Patent is a "SUBSTITUTE SOLAR ROOF FOR REPLACING BUILDING ROOFS" that, in addition to its specific function, offers new and effective essential features that contribute significant advantages over what has been available to date in this field, especially due to its double duty and practical utility.

Based on the FR-A-2 303 251 it is known to build a solar roof with a series of groove shaped cavities preferably parallel to each other. The cavities are provided with lateral solar ray reflecting surfaces and with absorbant elements guiding the fluid that is to be heated.

The main disadvantage of the known solar roof is that there is no flexibility in influencing the quantity of the needed heat, that depends on the four seasons periodically.

With this known solar roof the produced quantity of heat is anticyclic to the request of produced heat, because in summer it is higher than in winter.

Basing on the known solar roof as mentioned above, it is the object of the invention to improve the known solar roof in such a manner that its construction is adapted to the difference between the solar ray intensity and the needed quantity of heat during periods of years.

This improvement consists in a physical arrangement and orientation of the reflecting surfaces referring to the absorbent elements such, that the solar rays, in the time in which thermic energy is needed, generally in winter, meat the absorbant elements with a greater concentration than the solar rays in summer.

Consequently, the invention comprising a substitute solar roof for replacing building roofs featuring cavities which are provided with reflecting surfaces and with absorbent surface elements provided with channels for guiding a heat-carrying liquid, is characterized in that
- said roof consists of a least one series of parallel cavities;
- each cavity of a series is of the same cross-section;
- the absorbing surface elements of the cavities are inclined at an angle to the perpendicular to a common plane joining the lower edges of said absorbing surface elements ;
- each cavity comprises a first reflecting surface which is connected to the bottom edge of the absorbing surface element, and a second reflecting surface which is connected to its top edge said reflecting surfaces being arranged to diverge slightly apart from eacht other,
- a series of cavities is formed by connecting the first reflecting surface of one cavity to an adjacent cavity along the edge formed between the absorbing surface element and the second lateral reflecting surface of said adjacent cavity, such that solar rays in the winter can strike the absorbent element surface whereas solar rays in the summer are prevented from so doing by the reflecting surface

In accordance with the invention there is arranged an overflow pipe located at the top of the cavity to achieve heating and cooling of the fluids.

In accordance with the invention there is further arranged a fan-driven exhaust system for the hot air contained in the cavities as well as solar roofs with some additionally surfaces which are transparent to solar irradiation or solar roofs featuring the provision of some movable surfaces or solar roofs characterised by the fact that the cavities that form a roof are different from each other.

With the idea of using solar energy installations to the greatest advantage, within the state-of the art systems in use which this roof improves and complements in that it fulfills the primary function and also serves at the same time as the cover or roof of the buildings in which it is installed, a thorough investigation has been carried out to design and make the solar roof indicated herein. Its characteristic features and technical aspects are indicated below and illustrated with the explanatory drawings attached to this descriptive report.

Therefore, the solar roof that we propose demonstrates the following qualities of an eminently practical and functional nature:
a) It forms a roof in the classic style, replacing the normal roof on the building.
b) It thermally insulates the building, thus reducing calorific losses in winter and preventing the solar irradiation from transcending the solar roof in summer.
c) When the liquid circulates through this solar roof, it heats up if it is sunny and cools down if the opposite is true.
d) As it is properly grounded, it serves as a screen for electrical atmospheric discharges.

The substitute solar roof commented on herein is made up of a series of cavities in sufficient quantity and suitably structured for the purpose and extent of the desired service to be obtained from the solar energy harnessing installation.

Each cavity is provided with several reflecting surfaces constructed of a good solar ray reflective material, plus one or more absorbent surfaces in which the solar irradiation is converted into thermal energy. The advantage of these absorbent surfaces, which are constructively similar to those of flat panes of glass, is that, unlike the latter, they never reach high temperatures, thus allowing for the use of lower grade material such as certain types of plastic.

The physical arrangement and orientation of the reflecting surfaces is such that, in the season when energy is most required, they send a greater concentration of solar rays to the absorbent surfaces, whereas in the summer season, when energy is needed the least, they prevent the solar rays from striking these absorbent surfaces.

At the same time, the reflecting surfaces themselves serve as a storage area for the hot air generated by the absorbent surfaces when they heat up, for the purpose of minimizing energy losses due to natural convection.

The absorbent element is located in a place where the solid angle at which the cold focus (i.e. the sky) is seen is minimal, thus significantly reducing energy losses due to radiation.

Likewise, the rear surface of this absorbent element is thermally insulated to reduce losses during the conduction phase. Nevertheless, the losses that may be produced are absorbed by the building in which the solar roof is installed.

The thermal energy is collected in the absorbent element by means of a heat-carrying fluid, and it is sent to the points of consumption by means of a pump or stored in an accumulator.

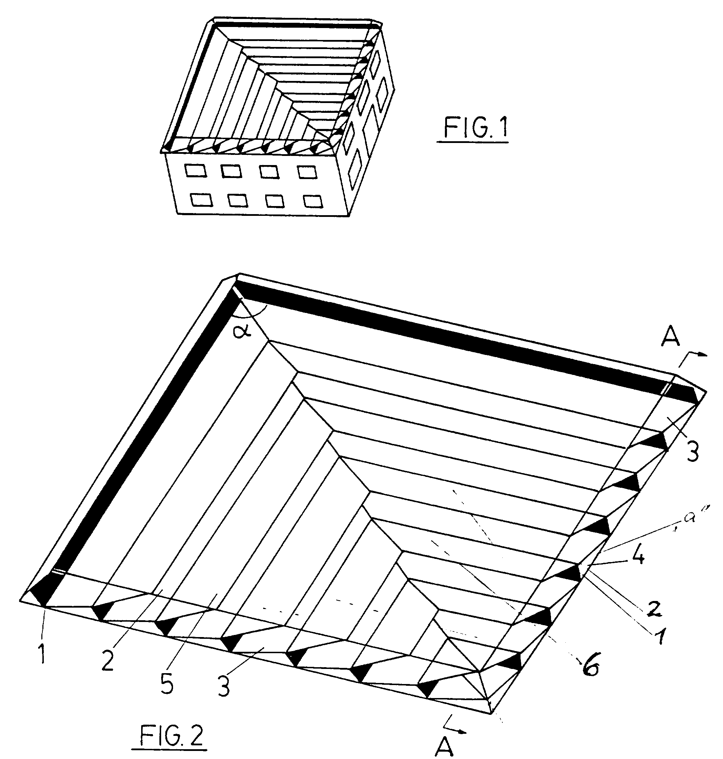

Figure 1 shows a perspective of the specific installation of a solar roof on an imaginary building.

Figure 2 contains an enlargement of the solar roof, showing the absorbent elements -1- through which the fluid to be heated circulates, the reflecting surfaces -2- and -5-, the side -3- that in this installation must be constructed of a surface translucent to solar irradiation such as plastic or glass, and the closed cavities -4- that make up the reflecting plates with the reinforcement of the last floor; these cavities prevent the heat in the last floor from leaking to the atmosphere. Therefore, these cavities perform the same function as a classical roof; however, the latter is perforated and in contact with the atmosphere to prevent high temperatures from being reached in summer, even though in winter there are more losses. Precisely the opposite occurs with the cavities described in the present invention; these cavities are completely closed, and thus in summer, the outside reflecting plates -5- act as shade and prevent the air in the cavity -4- from heating up excessively, which in turn avoids too much heat being transferred to the building. The angle may have any degree of magnitude or amplitude.

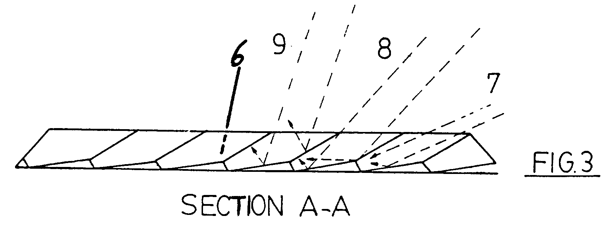

Figure 3 shows a section of figure 2 through line A-A, and also indicates the projection of solar rays in winter -7-, spring -8- and summer -9-.

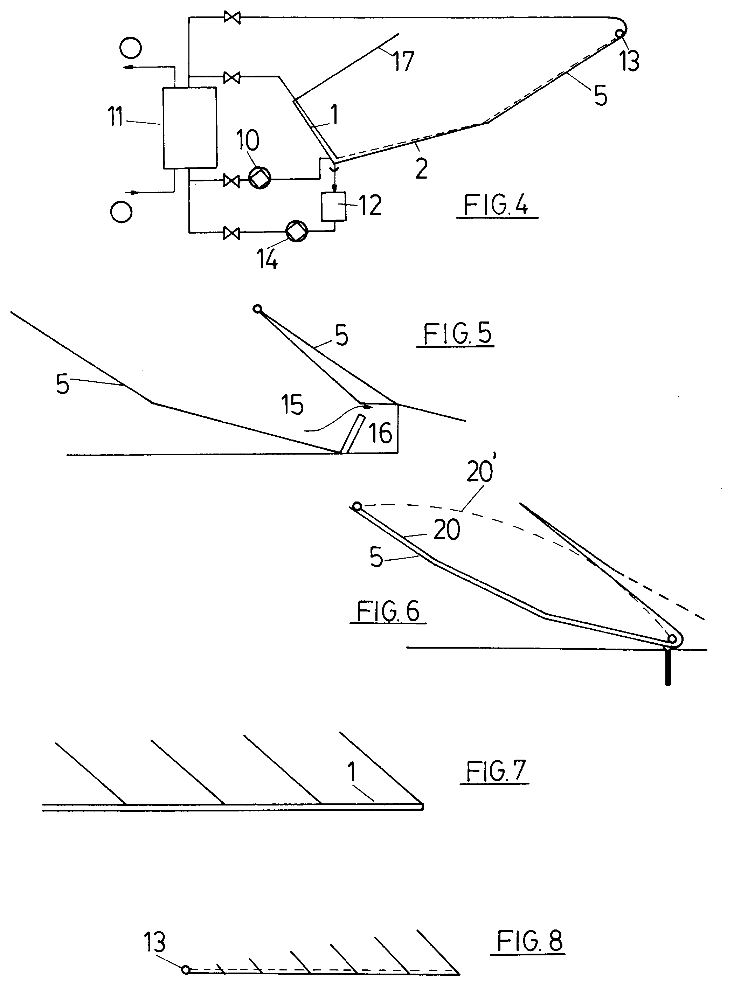

Figure 4 contains a diagram of a typical installation for heating in winter and cooling in summer, in which the heating operation is performed as follows: the pump -10- sends the heat-carrying fluid from the accumulator -11- to the absorbent element -1-, in which the fluid is heated by solar irradiation and is returned to the accumulator. This circumstance always ensures that the temperature of the absorbent is higher than the temperature of the heat-carrying fluid at the outlet of the accumulator -11-.

The cooling phase is performed as follows: the pump -14- drives the heat-carrying fluid from the tank -12- to the accumulator -11- and to the overflow pipe located at the top of the reflecting surfaces -5-. The fluid then goes down through this surface and that of -2- and, by means of a fallpipe, is housed in tank -12-. This process occurs whenever the temperature of the surface -5- is lower than the accumulator -11- temperature. In order to provide a greater degree of clarity to the illustration drawing in this figure, the auxiliary elements that complement the installation have not been shown.

The water evaporation that may occur on reflecting surfaces -2- and -5- will condense on the interior surface plate -17- and logically will drip down to the plate's lower edge where a suitable tank (not shown) is installed. In this way, distilled water is obtained for certain specific uses, thus demonstrating that maximum advantage is taken of the roof assembly's services.

Figure 5 showns a variation in which the hot air -15- inside the cavity is collected by means of a fan (not shown) and sent through duct -16- to the centers of consumption.

Figure 6 shows a variation in which a plastic plate -20- is provided over the reflecting surfaces and also over the absorbent surfaces. This plate serves to prevent the cooling water from getting dirty and to obtain higher water temperatures during the sunny hours. During the cold, nocturnal hours, this plate can be inflated by means of a fan to form an air bubble that insulates the building against the cold. The inflated plate is indicated at elevation -20'-. The absorbent element in this variation is a pipe whose rear portion is surrounded by the reflecting plates.

Figure 7 shows a variation in which the absorbent element -1- is located in the lower section. When heated by solar irradiation, it gives off energy to this lower portion, thus obtaining a radiant roof.

Figure 8 shows a variation in which the absorbent element -1- is located in the same lower section. The water coming from the overflow pipe -13- circulates through this element, is collected in this lower section and is sent to an accumulator (not shown).

## Claims

1. Substitute solar roof for replacing building roofs featuring cavities (6) which are provided with reflecting surfaces (2,5) and with absorbent surface elements (1) provided with channels for guiding a heat-carrying liquid,
characterized in that
- said roof consists of a least one series of parallel cavities;
- each cavity of a series is of the same cross-section;
- the absorbing surface elements (1) of the cavities are inclined at an angle to the perpendicular to a common plane joining the lower edges of said absorbing surface elements (1);
- each cavity comprises a first reflecting surface (2) which is connected to the bottom edge of the absorbing surface element (1) and a second reflecting surface (5) which is connected to its top edge said reflecting surfaces being arranged to diverge slightly apart from eacht other,
- a series of cavities is formed by connecting the first reflecting surface (2) of one cavity to an adjacent cavity along the edge formed between the absorbing surface element (1) and the second lateral reflecting surface (5) of said adjacent cavity, such that solar rays (7) in the winter can strike the absorbent element surface (1) whereas solar rays (9) in the summer are prevented from so doing by the reflecting surface (5).

2. Solar roof, in accordance with claim 1, featuring an overflow pipe (13) located at the top of the cavity to achieve heating and cooling of the fluids.

3. Solar roof, in accordance with claim 1, featuring a fandriven exhaust system for the hot air contained in the cavities.

4. Solar roof, in accordance with claim 1, characterized by the fact that some surfaces (20) are transparent to the solar irradiation.

5. Solar roof, in accordance with claim 1, featuring the provision of some movable surfaces (20').

6. Solar roof, in accordance with claim 1, characterized by the fact that the roof's angle of inclination is not zero degrees.

7. solar roof, in accordance with claim 1, characterized by the fact that it is self-substaining and does not require beam to support it.

## Patentansprüche

1. Sonnendachersatz anstelle eines Hausdaches mit Ausbildung von Hohlräumen (6), die mit reflektierenden Oberflächen (2,5) und mit absorbierende Oberflächen aufweisenden Elementen (1) mit Kanälen zur Führung einer Wärmeträger-flüssigkeit ausgebildet sind, gekennzeichnet durch die Merkmale:
- das Sonnendach besteht aus mindestens einer Serie paralleler Hohlräume;
- jeder Hohlraum einer Serie weist den gleichen Quer-schnitt auf;
- die absorbierenden Oberflächenelemente (1) der Hohlräume (6) sind in einem Winkel relativ zur Lotrechten einer die unteren Ecken der absorbierenden Oberflächenelemente (1) verbindenden Ebene geneigt angeordnet;
- jeder Hohlraum (6) weist eine erste reflektierende Fläche (2) auf, welche an die untere Kante des absorbierenden Oberflächenelementes (1) anschließt, sowie eine zweite reflektierende Fläche (5), welche an deren obere Kante anschließt, wobei die reflektierenden Flächen so angeordnet sind, daß sie ein wenig voneinander divergieren;
- eine Serie von Hohlräumen (6) wird durch Anschluß einer ersten reflektierenden Fläche (2) eines Hohlraumes (6) an einen angrenzenden Hohlraum (6) entlang der zwischen dem absorbierenden Oberflächenelement (1) und der zweiten seitlichen reflektierenden Fläche (5) des angrenzenden Hohlraumes (6) gebildeten Kante gebildet, derart, daß Sonnenstrahlen (7) im Winter die absorbierende Fläche des Elementes (1) treffen, wogegen Sonnenstrahlen (9) im Sommer durch die reflektierende Fläche 5 daran gehindert sind.

2. Sonnendach nach Anspruch 1, dadurch gekennzeichnet, daß am oberen Ende jeden Hohlraumes (6) ein Überströmrohr (13) angeordnet ist, um eine Heizung und Kühlung der Flüssigkeit zu erreichen.

3. Sonnendach nach Anspruch 1, gekennzeichnet durch ein lüfterbetriebenes System zum Absaugen von heißer Luft aus den Hohlräumen.

4. Sonnendach nach Anspruch 1, dadurch gekennzeichnet, daß einzelne Flächen (20) für Sonnenbestrahlung transparent sind.

5. Sonnendach nach Anspruch 1, gekennzeichnet durch Ausbildung einzelner beweglicher Flächen (20).

6. Sonnendach nach Anspruch 1, dadurch gekennzeichnet, daß die Neigung des Daches nicht 0 Grad beträgt.

7. Sonnendach nach Anspruch 1, dadurch gekennzeichnet, daß es selbsttragend ausgebildet ist und keine Träger benötigt.

## Revendications

1. Succédané de toiture solaire pour remplacer des toitures de bâtiments, présentant des cavités (6) qui sont pourvues de surfaces réfléchissantes (2, 5) et d'éléments à surface absorbante (1) pourvus de canaux de guidage d'un liquide caloporteur, caractérisé en ce que
- ledit succédané de toiture est constitué d'au moins une série de cavités parallèles;
- chaque cavité d'une série présente la même section transversale;
- les éléments à surface absorbante (1) des cavités sont inclinés suivant un angle par rapport à la perpendiculaire à un plan commun reliant les bords inférieurs desdits éléments à surface absorbante (1);
- chaque cavité comporte une première surface réfléchissante (2) qui est reliée au bord inférieur de l'élément à surface absorbante (1), et une seconde surface réfléchissante (5) qui est reliée à son bord supérieur, lesdites surfaces réfléchissantes étant agencées pour diverger légèrement l'une de l'autre;
- une série de cavités est formée en reliant la première surface réfléchissante (2) d'une cavité à une cavité contiguë, le long du bord formé entre l'élément à surface absorbante (1) et la seconde surface réfléchissante latérale (5) de ladite cavité contiguë, de sorte qu'en hiver, les rayons solaires (7) peuvent frapper la surface de l'élément absorbant (1) tandis qu'en été, les rayons solaires (9) sont empêchés de le faire par la surface réfléchissante (5).

2. Succédané de toiture solaire selon la revendication 1, présentant un tube de trop-plein (13) situé au sommet de la cavité, pour réaliser le chauffage et le refroidissement des fluides.

3. Succédané de toiture solaire selon la revendication 1, présentant un système d'échappement de l'air chaud contenu dans les cavités et entraîné par un ventilateur.

4. Succédané de toiture solaire selon la revendication 1, caractérisé en ce que certaines surfaces (20) sont transparentes pour l'irradiation solaire.

5. Succédané de toiture solaire selon la revendication 1, caractérisé en ce qu'il est pourvu de certaines surfaces mobiles (20').

6. Succédané de toiture solaire selon la revendication 1, caractérisé en ce que l'angle d'inclinaison de la toiture n'est pas de zéro degré.

7. Succédané de toiture solaire selon la revendication 1, caractérisé en ce qu'il est autoportant et ne nécessite pas de poutre pour la soutenir.
